Europäisches Patentamt

European Patent Office

Office européen des brevets

(19)

(11) Numéro de publication : **0 406 353 B1**

(12)
# FASCICULE DE BREVET EUROPEEN

(45) Date de publication du fascicule du brevet :
**17.03.93 Bulletin 93/11**

(51) Int. Cl.$^5$ : **B29B 15/12, B29C 67/14**

(21) Numéro de dépôt : **89912629.6**

(22) Date de dépôt : **27.10.89**

(86) Numéro de dépôt international :
**PCT/FR89/00564**

(87) Numéro de publication internationale :
**WO 90/04507 03.05.90 Gazette 90/10**

(54) RENFORTS TEXTILES POUR MATERIAUX COMPOSITES ET LEUR OBTENTION.

(30) Priorité : **28.10.88 FR 8814189**

(43) Date de publication de la demande :
**09.01.91 Bulletin 91/02**

(45) Mention de la délivrance du brevet :
**17.03.93 Bulletin 93/11**

(84) Etats contractants désignés :
**AT BE CH DE FR GB IT LI LU NL SE**

(56) Documents cités :
**EP-A- 0 189 351
EP-A- 0 275 722
DE-U- 8 703 947
FR-A- 2 241 604
GB-A- 908 217
US-A- 4 139 613
US-A- 4 410 385
US-A- 4 741 873**

(73) Titulaire : **BROCHIER S.A.
33 Avenue Franklin Roosevelt B.P. 272
F-69152 Décines Charpieu Cédex (FR)**

(72) Inventeur : **ALLAGNAT, Pierre
Charamel, Frontonas
F-38290 La Verpillière (FR)**
Inventeur : **CHARLES, Jean-Paul
23, rue des Trois-Grâces
F-69230 Saint-Genis-Laval (FR)**
Inventeur : **DELEHAYE, Michel
21A, rue Brunier
F-69300 Caluire (FR)**

(74) Mandataire : **Phélip, Bruno
c/o Cabinet Harlé & Phélip 21, rue de La
Rochefoucauld
F-75009 Paris (FR)**

EP 0 406 353 B1

## Description

L'invention appartient au domaine des renforts textiles pour matériaux composites .

Il est maintenant bien connu de fabriquer des matériaux composites de haute résistance, malgré leur faible poids , en associant une matrice , généralement une résine thermodurcissable, à un ensemble de structures textiles , telles que des tissus . Les techniques d'obtention de tels matériaux sont variées . Les tissus de renfort peu vent être imprégnés manuellement avec la résine, pour servir ensuite au moulage par la technique du moulage au contact . Une technique utilisée industriellement consiste à placer le renfort textile dans un moule , dans lequel on introduit la résine et, pour faciliter l'écoulement de celle-ci , on prévoit en général de créer un gradient de pression dans le moule pour permettre un transfert optimal de résine. Une autre technique largement utilisée consiste à comprimer un empilement de renforts textiles dans un moule, dans lequel on a introduit de la résine .

Dans une autre technique encore, on transfère sous l'effet de la chaleur et de la pression un film ou une feuille de résine , sur un empilement de tissus. ou une structure textile à orientation de fibres multidimensionnelle . Une autre technique consiste également à faire pas ser le renfort , après imprégnation par une résine, à travers une filière chauffée pour réaliser par pultrusion des pièces profilées continues . Tous ces procédés de fabrication de pièces en matériaux composites sont bien connus de l'homme du métier et n'ont donc pas besoin d'être décrits avec plus de détails.

Dans la pratique, la découpe, la manipulation, l'assemblage de plusieurs couches, la mise en forme de structures textiles sèches, c'est-à-dire non préimprégnées, posent fréquemment des problèmes et limitent les possibilités d'automatisation des opérations de fabrication des pièces en matériaux composites, notamment suivant les procédés mentionnés ci-dessus.

En particulier, le placement de renforts secs sur un moule de formes complexes est un problème mal résolu,tout spécialement dans le cas d'empilement de plusieurs couches et lorsque l'on cherche, pour obtenir de hautes performances mécaniques, à respecter des orientations de fibres précises , et réaliser des épaisseurs variables.

La présente invention a pour objet d'apporter une solution aux problèmes techniques qui viennent d'être mentionnés . Elle concerne d'abord un renfort textile pour matériau composite, caractérisé en ce qu'au moins une de ses faces comporte un poudrage, au moins par points, à raison de 3 à 25 $g/m^2$ et en particulier de 5 à 10$g/m^2$ d'une composition pulvérulente comprenant un prépolymère et un durcisseur de celui-ci,ladite composition étant choisie de manière à être compatible avec la matrice du matériau composite à fabriquer .

L'invention a également pour objet un procédé consistant à appliquer sur au moins une face du renfort textile , de 3 à 25 $g/m^2$ , en particulier de 5 à 10 $g/m^2$, d'une composition pulvérulente thermofusible réactive comprenant un prépolymère et un durcisseur de celui-ci, ce durcisseur ne devenant actif qu'à une température supérieure à celle à laquelle la poudre se ramollit en devenant collante , ladite composition étant choisie de manière à être compatible avec la matrice du matériau composite à fabriquer.

Il est déjà connu (voir par exemple GB-A-908 217 et EP-A-0 275 722) de répartir des composants fusibles sur un tissu-support, par exemple sous forme de nodules de résine,lesquels sont appliqués et ramollis par chauffage sur une face du tissu et y adhèrent après refroidissement. Il s'agit de produits thermocollants qui sont destinés à être collés à chaud dans des applications vestimentaires . Des moyens sont proposés pour empêcher la matière thermocollante de traverser le support.

De tels articles sont complètement étrangers au domaine de la présente invention,laquelle concerne des renforts textiles pour matériaux composites, qui peuvent être avantageusement préformés pour correspondre à la forme désirée du renfort la composition pulvérulente thermofusible doit être compatible avec la matrice du matériau composite à fabriquer . Il est sans importance qu'une telle composition traverse la structure textile du renfort .

Au sens de la présente invention ,l'expression renfort textile désigne toute structure comprenant des fibres qui sont habituellement utilisées dans la fabrication des matériaux composites . Il s'agit généralement de tissus, mais on peut aussi utiliser des non-tissés, sous forme de nappes. Généralement, ce sont des structures uni- ou bidirectionnelles; mais rien n'empêche d'appliquer l'invention à des structures multidirectionnelles, qui sont bien connues dans la technique de fabrication des renforts pour matériaux composites .

L'invention est applicable à des renforts textiles comprenant des fibres de toute nature , naturelles ou artificielles, mais on donne la préférence aux fibres techniques, qui sont largement utilisées dans les matériaux com posites, telles que les fibres de verre , de carbone , de bore , de silicium , de carbure de silicium , d'aramide et autres fibres techniques , seules ou en mélange .

Le moyen prévu par l'invention pour traiter les renforts textiles consiste essentiellement en un poudrage d'une ou deux faces du renfort en cause. A cet effet , on applique sur une ou deux faces du renfort une quantité déterminée et faible d'une composition pulvérulente,qui est répartie sur la ou les faces traitée(s) sans pour autant recouvrir la totalité de celle(s)-ci.

L'invention permet un assemblage et une mise en forme des renforts textiles secs, préalablement à leur introduction dans le moule, avec réalisation de "préformes" semi-rigides, aisément manipulables, pouvant se découper rapidement, par exemple sous forme d'empilement, et s'adaptant bien à des procédés automatiques. Par ailleurs, la solution retenue par l'invention ne perturbe pas l'écoulement de la résine dans le renfort textile, et n'augmente donc pas la durée de cette étape du procédé de fabrication. Dans la réalisation de matériaux composites à hautes performances, l'invention n'entraîne aucune diminution des propriétés thermomécaniques et de résistance chimique des pièces fabriquées. Egalement, l'invention apporte par le maintien de la position des fibres de renfort, une meilleure reproductibilité des propriétés mécaniques et facilite la réalisation des pièces devant présenter un bon état de surface. L'invention permet encore de produire des pièces ne nécessitant pas d'usinage de leur pourtour après moulage.

La composition pulvérulente thermofusible réactive comprend essentiellement un prépolymère et un durcisseur de celui-ci. Il existe de nombreux systèmes prépolymère-durcisseur accessibles à l'homme du métier, la seule condition à remplir étant que le durcisseur ne devienne actif qu'à une température supérieure à celle où la composition pulvérulente se ramollit et devient collante. Cette condition doit être remplie même si la température de ramollissement est atteinte plusieurs fois : le pouvoir adhésif de la composition peut ainsi être mis à profit à plusieurs reprises, la composition étant alors du type "réactivable". Il importe aussi que le prépolymère de la composition pulvérulente soit choisi de manière à être compatible avec la matrice du matériau composite à fabriquer ultérieurement. Pour cette raison, on donne souvent la préférence aux prépolymères époxydes, en raison des propriétés avantageuses que possèdent les matrices époxydes des matériaux composites. On a constaté que la mise en oeuvre des renforts textiles traités conformément à l'invention avec un poudrage de prépolymère époxyde et utilisables dans des matériaux composites avec une matrice époxyde, n'entraînait aucune variation des propriétés mécaniques à température ambiante, à chaud et après vieillissement humide. Lors de la mise en oeuvre et du moulage, on n'enregistre aucune variation des conditions d'écoulement de la matrice. Enfin, pour la fabrication finale du matériau composite, le cycle de polymérisation n'est pratiquement pas modifié par rapport à l'utilisation des résines durcissant à chaud.

Un exemple de composition pulvérulente thermofusible réactive de type prépolymère époxyde-durcisseur, convenant aux besoins de l'invention consiste en un polycondensat d'épichlorhydrine et de bisphénol A avec durcisseur anhydride d'acide, mélangés et broyés avec une granulométrie de 80 $\mu$m environ à 100 $\mu$m environ en majorité.

Une composition particulière de ce type se caractérise notamnent par :

ses propriétés rhéologiques avant réticulation, à savoir:

- une viscosité tenace entre 70 et 90°C
- une très forte fluidité entre 130 et 140°C.

ses condition de durcissement, à savoir :

- une durée de durcissement minimale de 24 heures pour une température minimale de 120°C ou une durée de durcissement minimale de 80 minutes pour une température minimale de 170°C.

ses propriétés rhéologiques après réticulation, à savoir:

- une résistance au cisaillement sous traction égale à 32 MPa à température ambiante,
- une résistance au cisaillement sous traction égale à 17 MPa à 100°C.

La masse de la composition pulvérulente qui est déposée sur au moins une face du renfort textile représente de 3 à 25 g/m$^2$ et de préférence de 5 à 10 g/m$^2$. On réalise ainsi un poudrage par points grâce au choix des conditions d'application de la poudre ainsi que de la granulométrie de celle-ci. Cette granulométrie doit en effet conduire à des points de collage d'une résistance suffisante malgré une répartition assez lâche à la surface du renfort, de manière à ne pas perturber ultérieurement l'écoulement de la résine servant de matrice lors de la fabrication du matériau composite. En règle générale, la granulométrie de la composition prépolymère- durcisseur peut aller de 20 à 180 $\mu$m. avantageusement de 40 à 100 $\mu$m environ.

Il va sans dire également que le système thermofusible réactif prépolymère-durcisseur devra présenter une température de ramollissement et une viscosité compatibles avec les techniques d'assemblage et de préformage des renforts textiles à basse température et basse pression. L'invention présente en effet beaucoup d'avantages et d'intérêt pour assembler plusieurs renforts textiles qui ont été traités par poudrage. On peut ainsi réaliser directement des empilements de renforts pour matériaux composites. L'assemblage de plusieurs renforts peut être réalisé de manière connue à des températures peu élevées , en général inférieures à 100°C , par exemple de l'ordre de 80°C , et sous pression réduite , notamment de 50 à 100 kPa. Les matériels utilisés peuvent consister , pour un formage en discontinu, en une plaque chauffante placée sous une membrane soumise à une dépression, en une presse ou tout autre moyen semblable; et pour un assemblage en continu, en des rouleaux qui assurent pression et chaleur ou tout autre moyen semblable .

Dans les conditions qui viennent d'être définies, l'assemblage peut être réalisé en une durée très faible par exemple inférieure à 1 minute , notamment de l'ordre de 30 secondes .

De manière similaire, un renfort textile traité conformément à l'invention peut être préformé , à une température peu élevée, en général inférieure à 100°C, par exemple 80°C, et sous pression réduite, notamment de l'ordre de 50 à 100 kPa, suivant une forme correspondant à celle désirée dans le matériau composite final. Les matériels utilisés peuvent consister, pour un formage en discontinu, en un moule chauffant placé sous une membrane soumise à une dépression, en une presse, ou tout autre moyen semblable ; et pour un formage en continu, en des rouleaux qui appliquent pression et chaleur, ou tout autre moyen semblable . En variante, l'élévation de température peut être obtenue par des radiants, dirigeant leur flux calorifique sur le renfort, la pression étant obtenue par un contre moule ou un sac à vide.

Dans la pratique, l'application de la composition pulvérulente prépolymère-durcisseur sur une ou deux faces du renfort textile peut être réalisée à partir d'un rouleau ou cylindre applicateur émerisé sous lequel défile le renfort textile, notamment un tissu présenté sous forme de bande . Dans ce cas la granulométrie de l'émeri du cylindre est adaptée à celle de la composition pulvérulente , dont des exemples ont été indiqués ci-dessus Egalement, la vitesse de défilement et la température d'application doivent être compatibles avec le seuil de réactivité du durcisseur . Par exemple,pour un système prépolymère époxyde-durcisseur, on a obtenu de bons résultats avec des températures d'application de l'ordre de 100 à 140°C.

Les renforts textiles obtenus conformément à l'invention , se caractérisent en ce qu'au moins une face du renfort comporte un poudrage, au moins par points, à raison de 3 à 25 g/m$^2$ et en particulier de 5 à 10 g/m2, d'une composition pulvérulente comprenant un prépolymère et un durcisseur de celui-ci .

Ainsi qu'on l'a indiqué précédemnent , ces renforts peuvent être préformés ou non.

Les renforts textiles traités suivant l'invention sont imprégnables par des résines de toute nature, mais on donne la préférence aux résines thermodurcissables à hautes performances , telles que les polyépoxydes et les bismaléimides .

Ainsi qu'on l'a mentionné plus haut , de tels renforts peuvent comprendre des types quelconques de fibres ou d'armures .Comme on le sait , les armures sont particulièrement utiles pour réaliser des tissus déformables.

Les renforts de l'invention présentent de nombreux avantages . A l'état de pièces individuel les, les renforts sont plus faciles à découper et à manipuler que les renforts analogues non traités. On a vu aussi que le poudrage permettait d'assembler plusieurs renforts,de même que de les préformer avant leur introduction dans le moule pour la fabrication du matériau composite.

On a constaté également que la mise en oeuvre des renforts de l'invention n'entraînait aucun inconvénient lors de la fabrication du matériau composite . Par exemple, dans le cas du moulage par transfert de résine,on n'a noté aucune réduction des vitesses d'écoulement et des distances injectées de résine . Ce comportement avantageux des renforts de l'invention sera illustré dans un exemple ci-après .

Les renforts traités conformément à l'invention peuvent être manipulés et magasinés en tant que tels . La nature des constituants du poudrage autorise un stockage prolongé (au moins 1 an) à une températre inférieure à 30°C sous emballage fermé dans un local exempt d'humidité . Les renforts selon l'invention peuvent donc être préparés à l'avance pour ensuite être commercialisés .

L'invention sera encore illustrée sans être aucunement limitée par la description ci-après faite en référence aux exemples et aux dessins annexés sur lesquels :

Fig.1 représente schématiquement en perspective une pièce de renfort selon l'invention;

Fig.2 représente un dispositif permettant le traitement en continu d'un renfort;

Fig.3 représente schématiquement les étapes de la réalisation d'une préforme à partir du renfort de la figure 1.

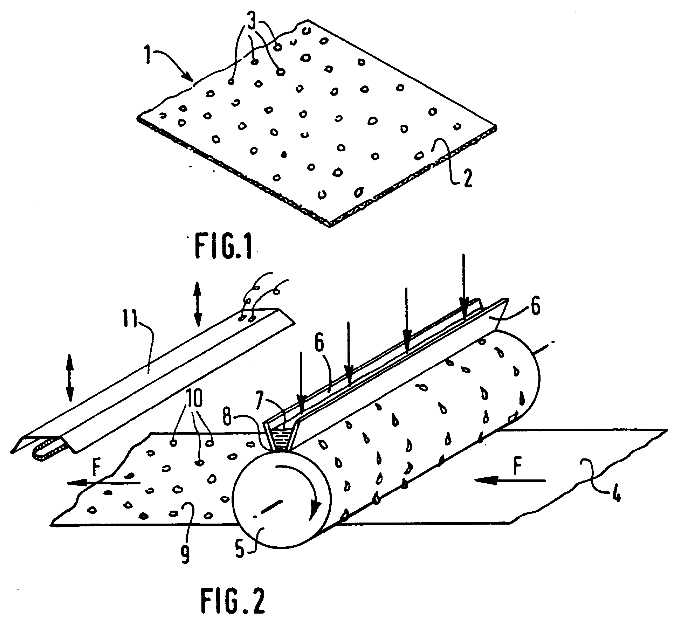

Le renfort représenté à la figure 1 et désigné par la référence 1 comporte , sur au moins l'une de ses faces 2 , un poudrage 3 , constitué d'un système thermofusible réactif prépolymère-durcisseur . Le dessin n'est qu'une représentation grossière destinée à illustrer que le poudrage est aléatoire et présente une répartition assez lâche , bien que, dans la pratique,des répartitions plus régulières ou plus serrées soient également possibles .

La figure 2 illustre schématiquement un dispositif permettant la fabrication en continu d'un tel renfort.

Le renfort à traiter, désigné par la référence 4,est alimenté sous forme de bande dans le sens de la flèche F. Il passe sous un cylindre applicateur 5 qui est garni de toile émeri de granulométrie analogue à celle de la poudre et qui, par sa rotation, entraîne la poudre 7 contenue dans une goulotte 6 dont la partie inférieure 8 est évidée. La poudre 7 ainsi entraînée par le cylindre 5 est appliquée sur toute la largeur du renfort 4.Le renfort ainsi saupoudré passe ensuite sous une rampe infrarouge 11 qui ramollit la poudre et la fixe à la surface 9 du renfort sous forme de points 10 constitués du système prépolymère-durcisseur.

Un renfort du type représenté à la figure 1 peut être utilisé dans la fabrication de matériaux composites , soit individuellement , soit après as semblage avec d'autres renforts analogues ou bien au sein d'un renfort pouvant comporter aussi d'autres structures textiles non traitées . Egalement, les renforts selon l'invention se prêtent particulièrement bien à un préformage dans les conditions indiquées précédemment.

Les exemples ci-après servent encore à illustrer l'invention sans aucunement la limiter .

## EXEMPLE 1

Dans cet exemple, on a utilisé un tissu - renfort ayant la référence BROCHIER Injectex (R)G 900 ,taffetas carbone GK.

Un tel tissu présente les caractéristiques suivantes :

Armure de tissage      : taffetas
Nature du fil
-chaîne      : carbone 6K
-trame      :1)carbone 6K
     2) carbone 6K guipé polyester
Masse surfacique      : 295 ± 12g/m²
     Contexture
-chaîne      : 37 ± 2,0 fils/10 cm
-trame      : 37 ± 2,0 fils/10 cm (par 1 coup carbone et 1 coup carbone guipé)
Epaisseur      : 0,33 ± 0,03 mm

Ce tissu est un taffetas conventionnel dont les caractéristiques d'injection ont été améliorées par l'introduction en trame d'un fil carbone guipé 1 coup sur 2. Avec un équipement du type schématiquement représenté à la figure 2, on a appliqué sur une face du tissu précité , à raison de 10 g / m², la composition pulvérulente thermofusible réactive ci-après :

polycondensat d'épichlorhydrine et de bisphénol A + durcisseur anhydride d'acide .

On a ainsi obtenu une bande de tissu , dont un échantillon est représenté schématiquement à la figure 1.

Pour illustrer l'utilité de l'invention, on a réalisé un assemblage de sept couches du tissu ainsi traité, l'assemblage étant réalisé dans une presse sous vide (500 Pa de pression résiduelle)pendant 30 sec à une température de l'ordre de 80°C. Aux fins de comparaison, on a également utilisé un même empilement de sept couches de tissu,mais ne comportant pas le poudrage selon l'invention.

Dans les deux cas, on a réalisé par transfert de résine une plaque de matériau composite de 300 x 120 x 2mm dans un moule à 70°C , sous une pression de 100 kPa;la matrice utilisée était constituée par une résine époxyde.

(produit mis sur le marché par la Société CIBA GEIGY sous la référence LY 564/HY 2954 ).Après moulage , la matrice a été polymérisée à 110°C pendant une heure , après quoi la plaque a subi une post-cuisson à 140°C pendant deux heures puis à 160°C pendant 15 minutes .

On a mesuré pour la comparaison, sur les plaques de matériau composite respectivement obtenues , la résistance au cisaillement interlaminaire "S", exprimée en MPa et mesurée suivant la norme IGC 0426.230 225.Le tableau I rassemble les résultats obtenus d'une part avec la plaque de matériau composite selon l'art antérieur et d'autre part avec la plaque de matériau composite de l'invention.

## TABLEAU I

| | AVANT VIEILLISSEMENT HUMIDE | |
|---|---|---|
| | S à 20°C | S à 100°C |
| art antérieur | 53 | 34 |
| invention | 53 | 34 |
| | APRES VIEILLISSEMENT HUMIDE * | |
| | S à 20°C | S à 100°C |
| art antérieur | 50 | 26 |
| invention | 50 | 26 |

* 14 jours dans l'eau à 70°C.

Les résultats du tableau I montrent que les valeurs de la résistance au cisaillement S sont identiques pour les deux plaques avant et après vieillissement humide aussi bien à 20°C qu'à 100°C . Ces résultats montrent clairement que les propriétés mécaniques des composites obtenus par moulage de renforts traités selon l'invention sont aussi bonnes que celles des composites obtenus par moulage de renforts habituels .

## EXEMPLE 2

Cet exemple est destiné à montrer que l'utilisation des renforts selon l'invention ne perturbe en rien les conditions d'obtention des matériaux composites .

A cet effet, on a utilisé un assemblage de trois plis de tissu-renfort identique à celui utilisé à l'exemple 1 et on a comparé avec un empilement avec trois plis de tissu ne comportant pas de poudrage .

On a fabriqué une pièce en matériau composite par transfert de résine , dans un moule sous vide partiel (pression résiduelle de 500 Pa ) à une température de 70°C, la résine étant la même que celle utilisée à l'exemple 1 (résine Ciba Geigy référence LY564/HY2954. ). On a apprécié les résultats en mesurant le temps d'injection de résine et la distance d'écoulement de celle-ci dans le moule , ce qui traduit les conditions du moulage par transfert et on a constaté que les valeurs mesurées étaient pratiquement identiques dans les deux cas.

TABLEAU II

- - - - - - - - - -

| Art antérieur | 1 mn | 2mn | 3 mn | 4mn |
|---|---|---|---|---|
| Distance (mm ) | 310 | 470 | 600 | 700 |

| Invention | 1mn | 2 mn | 3mn | 4 mn |
|---|---|---|---|---|
| Distance (mm) | 300 | 460 | 580 | 670 |

- - - - - - - - - - - - - - - - - - - - - - - - - - - - - - - - - -

On voit donc que les conditions de fabrication des matériaux composites ne sont pas modifiées lorsqu'on utilise des renforts traités conformément à l'invention.

EXEMPLE 3

Cet exemple est destiné à montrer l'utilisation des renforts traités selon l'invention, pour la fabrication de préformes sèches . Dans cet exemple, on a utilisé un tissu - renfort répondant aux caractéristiques ci-après :

L'armure de tissage est constituée par un tissu dit 3X comportant trois nappes de trame disposées parallèlement entre elles et au plan du tissu, et six nappes de chaîne qui traversent obliquement (avec un angle voisin de 45°) les nappes de trame.

Nature du fil
-chaîne                                    : silionne 68 Tex x 2
-trame                                     : silionne 68 Tex x 2
Masse surfacique nominale     : 410 g/m$^2$
Contexture nominale
-chaîne          : 15 fils/cm
-trame           : 15 coups/cm
Epaisseur       :0,38 mm

Ce tissu a été traité par la même composition pulvérulente thermofusible réactive et de la même façon que dans l'exemple 1.

Un empilement de deux couches de ce tissu a été porté à 80°C dans un four à infrarouge, pendant 30s, puis placé, par un système de transfert automatique, sous une presse à fermeture rapide qui applique une pression de 100 kPa par l'intermédiaire d'un moule en forme de parallélépipède de 500 × 300 mm . Les tissus sont laissés pendant 40s sous le moule fermé.

Il a été ainsi obtenu, en 90 sec environ, une préforme suffisamment rigide pour être aisément manipulée et découpée suivant un contour précis . Cette préforme peut être stockée, pendant plusieurs mois si nécessaire, puis entrer dans un cycle de production automatisé avec imprégnation suivant différents procédés, par exemple par transfert de résine, ou par compression, ou par transfert de film .

EXEMPLE 4

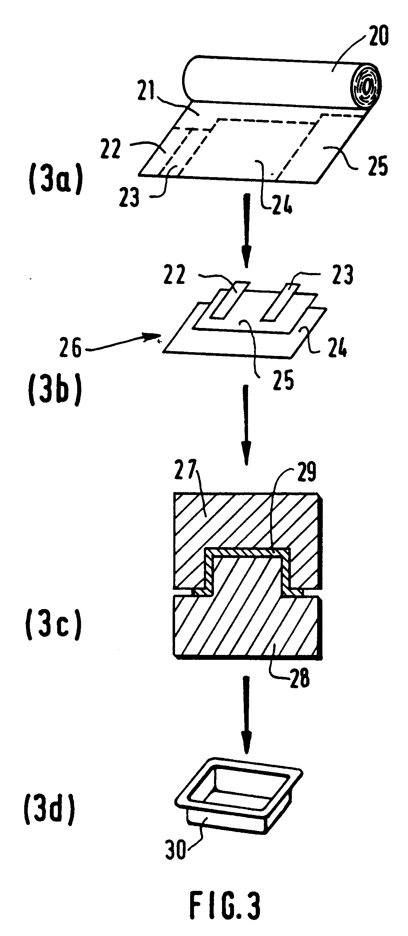

Cet exemple est destiné à illustrer l'aptitude à la réalisation de préformes à l'aide d'un renfort conforme à l'invention . La description qui suit est faite en référence à la figure 3 qui montre schématiquement les étapes de la fabrication d'une préforme ayant la configuration générale d'une cuvette avec un rebord à sa partie supérieure.

7

Le renfort 21 est déroulé à partir d'un rouleau 20. L'étape illustrée en (3a) consiste à découper dans le renfort 21 un certain nombre de pièces 22, 23, 24 et 25, qui, dans le cas présent et pour des raisons de simplicité, sont de forme rectangulaire .

On constate, dès cette première étape, l'avantage procuré par l'invention, car le traitement de poudrage facilite la découpe en limitant les déplacements de fibres et permet une manipulation automatique.

L'étape consécutive, illustrée en (3b) consiste à empiler, comme il est indiqué au dessin, les diverses pièces provenant de l'opération de découpe (3a).On voit ainsi que la pièce 24 est placée à la partie inférieure de l'empilement sur une table (non représentée) puis reçoit la pièce 25 et enfin les deux petites bandes 22 et 23 Grâce au poudrage, les pièces sont empilées et assemblées jusqu'à une configuration généralement plane, bien que comportant une certaine épaisseur, selon le nombre de plis de renforts qui sont superposés .

Pour maintenir en place les pièces dans l'empilement 26, on fait passer celui-ci dans un four infra-rouge (80-100°C), ce qui a pour effet de fixer les pièces constitutives avant leur passage dans l'étape (3c) de mise en forme .

Dans l'étape (3c) , l'empilement 26 de renforts de la figure (3b) est mis en forme suivant une forme 29 correspondant à celle désirée dans le matériau composite . Dans l'exemple illustré, on a montré un moule en deux parties 27, 28, constituant une presse . Tout autre équipement capable d'opérer à chaud et d'exercer une pression peut aussi être utilisé, par exemple une plaque chauffante avec membrane mise sous vide ou vessie gonflable . L'empilement de renforts est alors compacté, par exemple à 80°C sous 50 kPa.

On obtient ainsi une préforme 30 en forme de cuvette, telle que représentée en (3d) , dont les bords peuvent subir au préalable une opération classique d'ébavurage . Les préformes 30 peuvent être stockées avant d'être utilisées dans une opération de fabrication par moulage de matériaux composites . Elles peuvent d'ailleurs être aisément manipulées et mises en pile. La découpe de leur contour peut aussi être réalisée en série sur l'empilement ainsi obtenu.

Une préforme du type de la cuvette 30 comporte des angles , en particulier en forme de trièdres au niveau des sommets, qui peuvent être obtenus plus aisément grâce à la mise en oeuvre des renforts de l'invention.

L'invention n'est aucunement limitée par les exemples ci-dessus , qui n'ont été donnés qu'à titre illustratif . Les renforts de l'invention se prètent en effet à la fabrication de toutes sortes de préformes et de matériaux composites, selon les formes et configurations des pièces à réaliser .

## Revendications

1. Renfort textile pour matériau composite, comportant sur une au moins de ses faces un poudrage, au moins par points, à raison de 3 à 25 g/m$^2$ et, en particulier, de 5 à 10 g/m$^2$ d'une composition pulvérulente thermofusible comprenant un prépolymère et un durcisseur de celui-ci, le durcisseur ne devenant actif qu'à une température supérieure à celle où la composition pulvérulente se ramollit et devient collante, ladite composition étant choisie de manière à être compatible avec la matrice du matériau composite à fabriquer.

2. Renfort textile selon la revendication 1, caractérisé en ce qu'il comprend un tissu, ou un non-tissé, notamment sous forme de nappes, unidirectionnel, bidirectionnel ou multidirectionnel.

3. Renfort textile selon l'une des revendications 1 ou 2, caractérisé en ce qu'il comprend des fibres techniques, telles que des fibres de verre, de carbone, de bore, de silicium, de carbure de silicium, d'aramide et autres fibres utilisées dans les renforts pour matériaux composites, seules ou en mélange.

4. Renfort textile selon l'une quelconque des revendications 1 à 3, caractérisé en ce que le prépolymère est un prépolymère époxyde.

5. Renfort textile selon l'une quelconque des revendications 1 à 4, caractérisé en ce que le système prépolymère époxyde-durcisseur est un polycondensat d'épichlorhydrine et de bisphénol A, le durcisseur étant un anhydride d'acide.

6. Renfort textile selon l'une quelconque des revendications 1 à 5, caractérisé en ce que la composition pulvérulente présente une granulométrie d'environ 20 à 180 µm, de préférence d'environ 40 à 100 µm.

7. Renfort textile selon l'une quelconque des revendications 1 à 6, préformé pour correspondre à la forme désirée dans le matériau composite final .

8. Empilement(s) de renforts textiles pour matériaux composites comportant au moins un renfort textile selon l'une des revendications 1 à 7.

9. Empilement(s) selon la revendication 8, caractérisé(s) en ce que tous les renforts textiles sont des renforts textiles selon l'une des revendications 1 à 7 .

10. Procédé de traitement de renforts textiles pour matériaux composites, ledit procédé consistant à appliquer sur une ou deux faces du renfort textile, de 3 à 25 g/m$^2$, en particulier de 5 à 10 g/m$^2$ , d'une composition pulvérulente thermofusible réactive comprenant un prépolymère et un durcisseur de celui-ci, ce durcisseur ne devenant actif qu'à une température supérieure à celle à laquelle la poudre se ramollit en devenant collante, ladite composition étant choisie pour être compatible avec la matrice du matériau composite à fabriquer .


**Patentansprüche**

1. Textilverstärkung für Verbundstoffe, enthaltend auf zumindest einer ihrer Oberflächen eine Bepulverung, zumindest je Stellen, in einer Menge von 3 bis 25 g/m$^2$, und insbesondere 5 bis 10 g/m$^2$, aus einer wärmeschmelzbaren pulverförmigen Zusammensetzung , die ein Präpolymeres und einen Härter für dieses umfaßt, wobei der Härter erst bei einer Temperatur oberhalb derjenigen aktiv wird, bei der die pulverförmige Zusammensetzung erweicht und klebend wird, und wobei die Zusammensetzung derart gewählt wird, daß sie mit der Matrix der herzustellenden  Verbundstoffe verträglich ist.

2. Textilverstärkung gemäß Anspruch 1, dadurch gekennzeichnet, daß sie ein Gewebe oder ein einseitig gerichtetes, zweiseitig gerichtetes oder mehrseitig gerichtetes nicht gewebtes Material umfaßt.

3. Textilverstärkung gemäß einem der Ansprüche 1 oder 2, dadurch gekennzeichnet, daß sie technische Fasern, wie Fasern aus Glas, Kohlenstoff, Bor, Silicium, Siliciumcarbid, Aramid und andere Fasern, die in den Verstärkungen für Verbundstoffe eingesetzt werden, allein oder im Gemisch enthält.

4. Textilverstärkung gemäß einem der Ansprüche 1 bis 3, dadurch gekennzeichnet, daß das Präpolymere ein Epoxid-Präpolymeres ist.

5. Textilverstärkung gemäß einem der Ansprüche 1 bis 4, dadurch gekennzeichnet, daß das Präpolymersystem Epoxid-Härter ein Polykondensat von Epichlorhydrin und Bisphenol A ist, wobei der Härter ein Säureanhydrid ist.

6. Textilverstärkung gemäß einem der Ansprüche 1 bis 5, dadurch gekennzeichnet, daß die pulverförmige Zusammensetzung eine Granulometrie von etwa 20 bis 180 $\mu$m, vorzugsweise etwa 40 bis 100 $\mu$m, aufweist.

7. Textilverstärkung gemäß einem der Ansprüche 1 bis 6, vorgeformt, um der gewünschten Form in dem endgültigen Verbundstoff zu entsprechen.

8. Textilverstärkungs-Stapelmaterial(ien) gemäß einem der Ansprüche 1 bis 7 für Verbundstoffe.

9. Textilverstärkungs-Stapelmateial(ien) gemäß Anspruch 8, dadurch gekennzeichnet, daß alle Textilverstärkungen Textilverstärkungen gemäß einem der Ansprüche 1 bis 7 sind.

10. Verfahren zur Behandlung von Textilverstärkungen für Verbundstoffe, welches darin besteht, daß man auf eine oder beide Oberflächen der Textilverstärkung 3 bis 25 g/m$^2$, insbesondere 5 bis 10 g/m$^2$ einer reaktiven wärmeschmelzbaren pulverförmigen Zusammensetzung aufbringt, die ein Präpolymeres und einen Härter hierfür umfaßt, wobei der Härter erst bei einer Temperatur oberhalb derjenigen aktiv wird, bei der das Pulver unter Klebendwerden erweicht, wobei die Zusammensetzung derart gewählt wird, daß sie mit der Matrix des herzustellenden Verbundstoffes verträglich ist.


**Claims**

1. A textile reinforcement for composite material, presenting on at least one of its faces a powdering, at leat point s - fashion, at a rate of 3 to 25 g/m² and in particular from 5 to 10 g/m², of a pulverulent hot-melt composition comprising a prepolymer and a hardener for the latter, this hardener becoming active only at a temperature above that at which the pulverulent composition softens to become tacky the said composition being chosen so as to be compatible with the matrix of the composite material to be manufactured.

2. The textile reinforcement according to claim 1, characterized in that it comprises a unidirectional bidirectional or multidirectional tissue or nonwoven.

3. The textile reinforcement according to either of claims 1 and 2, characterized in that it comprises technical fibers such as glass, carbon, boron, silicon, silicon carbide or aramid fibers and other fibers employed in the reinforcements for composite materials, by themselves or mixed.

4. The textile reinforcement according to any one of claims 1 to 3, characterized in that the prepolymer is an epoxide prepolymer.

5. The textile reinforcement according to any one of claims 1 to 4, characterized in that the epoxide prepolymer-hardener system is a polycondensate of epichlorohydrin and of bisphenol A, the hardener being an acid anhydride.

6. The textile reinforcement according to any one of claims 1 to 5, characterized in that the pulverulent composition has a particle size from approximately 20 to 180 $\mu$m, preferably approximately 40 to 100 $\mu$m.

7. The textile reinforcement according to any one of claims 1 to 6, preformed to correspond to the desired shape of the final composite material.

8. Stack(s) of textile reinforcements according to any one of claims 1 to 7, for composite materials.

9. Stack(s) of textile reinforcements according to claim 8, characterized in that all the textile reinforcements are textile reinforcements according to any one of claims 1 to 7.

10. A process for the treatment of textile reinforcements for composite materials, the said process consisting in applying onto one or two faces of the textile reinforcement from 3 to 25 g/m², in particular from 5 to 10 g/m², of a reactive pulverulent hot-melt composition comprising a prepolymer and a hardener for the latter, this hardener becoming active only at a temperature above that at which the powder softens to become tacky, the said composition being chosen to be compatible with the matrix of the composite material to be manufactured.

EP 0 406 353 B1

FIG.1

FIG.2

11

(3a)

(3b)

(3c)

(3d)

FIG.3